# EUROPÄISCHE PATENTANMELDUNG

(11) **EP 3 185 403 A1**
(43) Veröffentlichungstag der Anmeldung: **28.06.2017**
(21) Anmeldenummer: 15202269.5
(22) Anmeldetag: 23.12.2015
(51) Int. Cl.: H02K 1/28, H02K 1/30, H02K 7/00, H02K 11/25

(54) **PERMANENTERREGTE SYNCHRONMASCHINE MIT AUTOMATISCHER ROTORENTKOPPLUNG IM WICKLUNGSKURZSCHLUSS**

(71) Anmelder: Siemens Aktiengesellschaft, 80333 München (DE)
(72) Erfinder: Adam, Christoph, 90411 Nürnberg (DE); Jansen, Andre, 46325 Borken (DE); Körner, Olaf, 90469 Nürnberg (DE)

(57) **Zusammenfassung**

Eine permanenterregte Synchronmaschine (4) weist einen Stator (5) auf, in dem eine Statorwicklung (6) angeordnet ist. Die Synchronmaschine (4) weist einen um eine Rotationsachse (9) rotierbaren Rotor (7) auf, in dem Permanentmagnete (11) ange-ordnet sind. Der Rotor (7) ist mit einer Motorwelle (10) über eine Verbindungseinrichtung (14) verbunden. Die Verbindungseinrichtung (14) ist derart ausgebildet, dass sie zunächst den Rotor (7) drehfest mit der Motorwelle (10) verbindet, so dass ein durch das Zusammenwirken von Statorwicklung (6) und Permanentmagneten (11) generiertes Drehmoment auf die Motorwelle (10) übertragen wird. Die Verbindungseinrichtung (14) ist weiterhin derart ausgebildet, dass sie im Falle eines Kurzschlusses der Statorwicklung (6) automatisch die drehfeste Verbindung des Rotors (7) löst, so dass ein auf die Motorwelle (10) wirkendes Drehmoment nicht mehr auf den Rotor (7) übertragen wird.

## Beschreibung

Die vorliegende Erfindung geht aus von einer permanenterregten Synchronmaschine,
- wobei die Synchronmaschine einen Stator aufweist, in dem eine Statorwicklung angeordnet ist,
- wobei die Synchronmaschine einen um eine Rotationsachse rotierbaren Rotor aufweist, in dem Permanentmagnete angeordnet sind,
- wobei der Rotor mit einer Motorwelle über eine Verbindungseinrichtung verbunden ist,
- wobei die Verbindungseinrichtung derart ausgebildet ist, dass sie den Rotor drehfest mit der Motorwelle verbindet, so dass ein durch das Zusammenwirken von Statorwicklung und Permanentmagneten generiertes Drehmoment auf die Motorwelle übertragen wird.

Die vorliegende Erfindung geht weiterhin aus von einem Landfahrzeug, wobei das Landfahrzeug mehrere Fahrantriebe aufweist, die jeweils eine derartige Synchronmaschine aufweisen und mittels der Synchronmaschine jeweils mindestens ein Rad des Landfahrzeugs antreiben.

Bei Landfahrzeugen - dies gilt insbesondere für Schienenfahrzeuge, ist aber nicht notwendigerweise auf Schienenfahrzeuge beschränkt - sind oftmals viele Umrichter und Elektromotoren vorhanden, die jeweils ein Rad oder einen Radsatz antreiben. Fällt ein einzelner Umrichter oder Elektromotor aus, wird das Landfahrzeug ohne den ausgefallenen Umrichter bzw. den ausgefallenen Elektromotor weiter betrieben. Wenn der Elektromotor eine permanenterregte Synchronmaschine ist und ein derartiger Elektromotor mit einem Wicklungskurzschluss ausfällt, d.h. ein Kurzschluss in der Statorwicklung auftritt, so wird im Stand der Technik der zugehörige Umrichter abgeschaltet und vom Elektromotor getrennt. Es wird nach dem Abschalten des Umrichters keine äußere Spannung mehr in den ausgefallenen Elektromotor eingespeist. Über den Rad-Schiene-Kontakt bzw. allgemein Rad-Boden-Kontakt wird der Rotor jedoch weiterhin durch das fahrende Fahrzeug in Rotation versetzt. Die im Rotor angeordneten Permanentmagnete induzieren daher in der Statorwicklung Spannung. Die induzierte Spannung treibt einen Fehlerstrom über die Fehlerstelle, an welcher der Kurzschluss aufgetreten ist. Dadurch entstehen oftmals Lichtbögen und/ oder hohe thermische Verluste. Als Folge kann die Isolation der Statorwicklung sich überhitzen und verbrennen. Auch das Kupfer der Statorwicklung kann unter Umständen zum Schmelzen gebracht werden. Über diese bereits für sich gesehen negativen Wirkungen hinaus kann weiterhin eine (an sich eigentlich harmlose) Rauchentwicklung auftreten, welche beispielsweise bei einem Schienenfahrzeug zu einer erheblichen Beunruhigung von Fahrgästen führen kann.

Es ist daher von Vorteil, im Falle eines Wicklungskurzschlusses den Rotor (genauer: den Aktivteil des Rotors) vom rotierenden Rad zu trennen, so dass der Aktivteil nicht mehr rotiert. Dann wird aufgrund der fehlenden Rotation in der Statorwicklung auch keine Spannung mehr induziert, so dass über den Wicklungskurzschluss hinaus keine Folgeschäden mehr auftreten.

Sicherheitskupplungen zum Abkoppeln des Fahrmotors vom Antriebsstrang im Fehlerfall sind bekannt. Diese werden aber meist separat (aktiv) geschaltet.

Aus der DE 10 2013 104 558 A1 ist ein Antriebsstrang für ein Schienenfahrzeug bekannt, der eine Radsatzwelle und ein Großrad zur Übertragung eines Drehmoments von einer Antriebseinheit auf die Radsatzwelle umfasst. Bei diesem Antriebsstrang ist eine Überlastkupplung drehfest mit der Radsatzwelle verbunden. Die Überlastkupplung koppelt das Großrad drehfest mit der Radsatzwelle. Die Überlastkupplung weist ein vorgegebenes Schaltmoment auf. Bei Überschreiten des Schaltmoments gibt die Überlastkupplung das Großrad gegenüber der Radsatzwelle frei. Bei der DE 10 2013 104 558 A1 wird die Radsatzwelle vom Antrieb daher bei Überschreiten eines mechanisch wirkenden Drehmoments getrennt. Für eine Trennung im Falle eines Wicklungskurzschlusses ist diese Ausgestaltung ungeeignet.

Die Aufgabe der vorliegenden Erfindung besteht darin, eine permanenterregte Synchronmaschine derart auszugestalten, dass im Falle eines Wicklungskurzschlusses auf einfache und zuverlässige Weise eine Drehmomentübertragung von der Motorwelle auf den Rotor der permanenterregten Synchronmaschine unterbunden wird.

Die Aufgabe wird durch eine permanenterregte Synchronmaschine mit den Merkmalen des Anspruchs 1 gelöst. Vorteilhafte Ausgestaltungen der erfindungsgemäßen Synchronmaschine sind Gegenstand der abhängigen Ansprüche 2 bis 12.

Erfindungsgemäß wird eine permanenterregte Synchronmaschine der eingangs genannten Art dadurch ausgestaltet,
- dass die Verbindungseinrichtung derart ausgebildet ist, dass sie den Rotor nur zunächst drehfest mit der Motorwelle verbindet, so dass ein durch das Zusammenwirken von Statorwicklung und Permanentmagneten generiertes Drehmoment auf die Motorwelle übertragen wird, und
- dass die Verbindungseinrichtung weiterhin derart ausgebildet ist, dass sie im Falle eines Kurzschlusses der Statorwicklung automatisch die drehfeste Verbindung des Rotors löst, so dass ein auf die Motorwelle wirkendes Drehmoment nicht mehr auf den Rotor übertragen wird.

Aufgrund dieser Ausgestaltung erfolgt im Falle eines Wicklungskurzschlusses eine automatische Auflösung der drehfesten Verbindung des Rotors mit der Motorwelle. Die oben genannten Nachteile werden daher vermieden.

Die Motorwelle kann mit der Rotorwelle - d.h. derjenigen Welle, auf welcher der Rotor angeordnet ist - identisch sein. Alternativ kann es sich um eine andere Welle handeln. In jedem Fall aber ist die Motorwelle diejenige Welle, über welche von der permanenterregten Synchronmaschine ein Drehmoment nach außen abgegeben wird.

In einer möglichen Ausgestaltung der Synchronmaschine ist vorgesehen,
- dass der Rotor drehfest auf einer von der Motorwelle verschiedenen Rotorwelle angeordnet ist,
- dass die Motorwelle eine die Rotorwelle übergreifende Nabe aufweist,
- dass zwischen der Rotorwelle und der Nabe eine Lagerung angeordnet ist,
- dass die Verbindungseinrichtung ein Halteelement umfasst, mittels dessen die Nabe zunächst radial an die Rotorwelle angepresst wird, so dass aufgrund der Pressung das durch das Zusammenwirken von Statorwicklung und Permanentmagneten generierte Drehmoment auf die Motorwelle übertragen wird, und
- dass das Halteelement zumindest teilweise aus einem Material besteht, dessen Festigkeit und/oder Zusammenhalt im Falle eines Kurzschlusses der Statorwicklung durch eine auftretende Überhitzung der Statorwicklung und/oder auftretende Lichtbögen so weit reduziert wird, dass die Pressung der Nabe an die Rotorwelle aufgehoben wird.

Diese Ausgestaltung weist den Vorteil auf, dass der Rotor, so wie auch sonst üblich, drehfest auf der Rotorwelle angeordnet sein kann.

Bei dieser Ausgestaltung kann das Halteelement als die Nabe radial außen umgebende Bandage ausgebildet sein. Ein mögliches Material der Bandage ist eine mit einem Verfestiger getränkte Glasfasermatte oder Kohlefasermatte. Eine Schmelztemperatur des Verfestigers sollte in diesem Fall zwischen ca. 200°C und ca. 300°C liegen, insbesondere zwischen ca. 250°C und ca. 280°C. Derartige Verfestiger sind Fachleuten bekannt. Ein Beispiel eines geeigneten Verfestigers ist insbesondere ein Verfestiger, dessen sogenannte Glastemperatur in diesem Bereich liegt. Thermoplaste können als derartige Verfestiger gewählt werden.

Die Lagerung zwischen der Rotorwelle und der Nabe ermöglicht es, dass bei Fortsetzen der Fahrt des Landfahrzeugs und damit insbesondere bei Fortsetzen des Rotierens der Motorwelle keine Schäden auftreten, insbesondere ein freies Rotieren der Motorwelle relativ zur Rotorwelle möglich ist. Vorzugsweise ist die Lagerung als Notlagerung ausgebildet. Aufgrund der Ausgestaltung als Notlagerung kann die Lagerung zwischen der Motorwelle und der Rotorwelle einfach und sehr kostengünstig ausgestaltet werden. Die Notlagerung muss hingegen nicht einen Dauerbetrieb über Tage, Wochen und Monate hinweg gewährleisten können. Es reicht, die momentane Fahrt des Landfahrzeugs fortsetzen zu können, beispielsweise bis zur nächsten Reparaturmöglichkeit.

In einer weiteren möglichen Ausgestaltung der Synchronmaschine ist vorgesehen,
- dass der Rotor auf der Motorwelle drehbar gelagert ist,
- dass die Verbindungseinrichtung einen Ring umfasst, der an einem axialen Ende des Rotors mit dem Rotor drehfest verbunden ist,
- dass die Verbindungseinrichtung mindestens einen Bolzen umfasst, der teilweise in einer Ausnehmung des Rings und teilweise in einer Ausnehmung der Motorwelle angeordnet ist, so dass das durch das Zusammenwirken von Statorwicklung und Permanentmagneten generierte Drehmoment über den Bolzen auf die Motorwelle übertragen wird,
- dass die Verbindungseinrichtung ein Halteelement umfasst, mittels dessen eine radiale Verschiebung des Bolzens aus der Ausnehmung der Motorwelle zunächst verhindert wird, und
- dass das Halteelement zumindest teilweise aus einem Material besteht, dessen Festigkeit und/oder Zusammenhalt im Falle eines Kurzschlusses der Statorwicklung durch eine auftretende Überhitzung der Statorwicklung und/oder auftretende Lichtbögen so weit reduziert wird, dass der Bolzen sich aus der Ausnehmung der Motorwelle heraus verschiebt.

Diese Ausgestaltung den Vorteil auf, dass das von der Synchronmaschine aufgebrachte Drehmoment im Normalbetrieb (d.h. bei Bestehen der drehfesten Verbindung zwischen Rotor und Motorwelle) über den Bolzen übertragen wird. Auf das Halteelement wirken hingegen nur die vom Bolzen auf das Halteelement ausgeübt und Fliehkräfte. Diese sind jedoch sehr gering.

Das Halteelement kann in diesem Fall beispielsweise als den Ring radial außen umgebende Bandage ausgebildet sein. Die möglichen Materialien der Bandage sind obenstehend bereits erwähnt.

Vorzugsweise weist die Verbindungseinrichtung mindestens eine Druckfeder auf, mittels derer auf den Bolzen eine nach radial außen gerichtete Kraft ausgeübt wird. Dadurch wird bewirkt, dass dann, wenn die Festigkeit und/oder der Zusammenhalt des Halteelements reduziert wird, der Bolzen durch die Druckfeder aktiv nach radial außen gedrückt wird. Die Druckfeder kann - beispielsweise durch eine geeignete Auslegung oder durch einen Anschlag - derart ausgebildet sein, dass sie nach dem Herausdrücken des Bolzens aus der Motorwelle nicht selbst in den Ring hineinragt. Alternativ kann die Druckfeder derart dimensioniert sein, dass sie zwar den Bolzen aus der Motorwelle herausdrückt und danach selbst in den Ring hineinragt, jedoch kein nennenswertes Drehmoment übertragen kann, sondern beispielsweise selbst zuvor abgeschert wird.

Besonders bevorzugt ist derzeit, die Synchronmaschine dadurch auszugestalten,
- dass der Rotor auf der Motorwelle drehbar gelagert ist,
- dass die Verbindungseinrichtung ein erstes Kupplungsteil umfasst, das drehfest auf der Motorwelle angeordnet ist,
- dass die Verbindungseinrichtung ein zweites Kupplungsteil umfasst, das drehfest mit dem Rotor verbunden ist,
- dass die Verbindungseinrichtung ein den Rotor und das erste und das zweite Kupplungsteil axial durchdringendes Halteelement umfasst, mittels dessen zunächst das erste Kupplungsteil axial an das zweite Kupplungsteil angedrückt wird, so dass das durch das Zusammenwirken von Statorwicklung und Permanentmagneten generierte Drehmoment durch das Zusammenwirken von erstem und zweitem Kupplungsteil auf die Motorwelle übertragen wird, und
- dass das Halteelement zumindest teilweise aus einem Material besteht, dessen Festigkeit und/oder Zusammenhalt im Falle eines Kurzschlusses der Statorwicklung durch eine auftretende Überhitzung der Statorwicklung und/oder auftretende Lichtbögen so weit reduziert wird, dass ein von dem Halteelement auf das erste und das zweite Kupplungsteil ausgeübter Druck so weit reduziert wird, dass es ein Verschieben des ersten und des zweiten Kupplungsteils voneinander weg ermöglicht.

Diese Ausgestaltung weist insbesondere den Vorteil auf, dass das Auslösen des Verbindungselements, also das Aufheben der drehfesten Verbindung des Rotors mit der Motorwelle, zuverlässig ausgelöst wird, wobei das Auslösen unabhängig davon ist, bei welcher Axialposition der Wicklungskurzschluss aufgetreten ist und bei der demzufolge die stärkste Hitzeentwicklung auftritt. Insbesondere zeigt die Erfahrung, dass, wenn ein Wicklungskurzschluss auftritt, dieser in der Regel in einem der beiden Wicklungsköpfe auftritt.

Das Halteelement kann als Anzahl von Bandagen ausgebildet sein. Die möglichen Materialien der Bandagen sind obenstehend bereits erwähnt.

Alternativ ist es möglich,
- dass das Halteelement als Anzahl von Bolzen ausgebildet ist, die an beiden axialen Enden durch Fixierungselemente gesichert sind, und
- dass die Fixierungselemente aus einem Material bestehen, dessen Festigkeit und/oder Zusammenhalt im Falle eines Kurzschlusses der Statorwicklung durch auftretende Überhitzung der Statorwicklung und/oder auftretende Lichtbögen reduziert wird.

Die Fixierungselemente können beispielsweise als Schmelzsicherungen ausgebildet sein. Die Schmelzsicherungen können beispielsweise aus einem Weichlot bestehen, das eine geeignete Solidustemperatur aufweist. Fachleuten sind die verschiedensten Weichlote bekannt, wobei diese Solidustemperaturen zwischen 138°C und 308°C aufweisen. Geeignet sind im Rahmen der vorliegenden Erfindung Weichlote mit einer Solidustemperatur zwischen 200°C und 300°C, insbesondere zwischen 250°C und 280°C. Beispielsweise weist eine eutektische Mischung aus 99,3% Zinn und 0,7% Kupfer einen Schmelzpunkt von 227°C auf. Gleiches gilt für eine eutektische Mischung aus 99,0% Zinn, 0,3% Silber und 0,7% Kupfer. Reines Zinn weist einen Schmelzpunkt von 232°C auf, eine Mischung von 89% Zinn, 10,5% Antimon und 0,5% Kupfer eine Solidustemperatur von 242°C. Jedes dieser Weichlote kann als Material für die Schmelzsicherungen verwendet werden. Auch andere Weichlote mit einer höheren oder einer niedrigeren Solidustemperatur können je nach Bedarf verwendet werden. Ebenso können geeignete Kunststoffe verwendet werden, beispielsweise PEEK.

Vorzugsweise ist zwischen dem ersten und dem zweiten Kupplungsteil mindestens eine Druckfeder angeordnet, mittels derer auf das erste und das zweite Kupplungsteil eine das erste und das zweite Kupplungsteil voneinander weg treibende Kraft ausgeübt wird. Dadurch wird bewirkt, dass dann, wenn die Festigkeit und/oder der Zusammenhalt des Halteelements reduziert wird, die Kupplungsteile durch die Druckfeder aktiv voneinander weg gedrückt werden.

Die Lagerung, mittels derer der Rotor auf der Motorwelle gelagert ist, ist vorzugsweise als Notlagerung ausgebildet. Aufgrund der Ausgestaltung als Notlagerung kann die Lagerung des Rotors auf der Motorwelle einfach und sehr kostengünstig ausgestaltet werden. Die Notlagerung muss hingegen nicht einen Dauerbetrieb über Tage, Wochen und Monate hinweg gewährleisten können. Es reicht, die momentane Fahrt des Landfahrzeugs eine Zeitlang fortsetzen zu können.

Die Aufgabe wird weiterhin durch ein Landfahrzeug mit den Merkmalen des Anspruchs 13 gelöst. Erfindungsgemäß wird ein Landfahrzeug der eingangs genannten Art dadurch ausgestaltet, dass die Antriebe jeweils eine erfindungsgemäße Synchronmaschine aufweisen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Landfahrzeug,
- FIG 2: eine permanenterregte Synchronmaschine,
- FIG 3: eine mögliche Ausgestaltung einer Rotoranordnung der Synchronmaschine von FIG 2,
- FIG 4: eine weitere mögliche Ausgestaltung der Rotoranordnung der Synchronmaschine von FIG 2 und
- FIG 5: eine weitere mögliche Ausgestaltung der Rotoranordnung der Synchronmaschine von FIG 2.

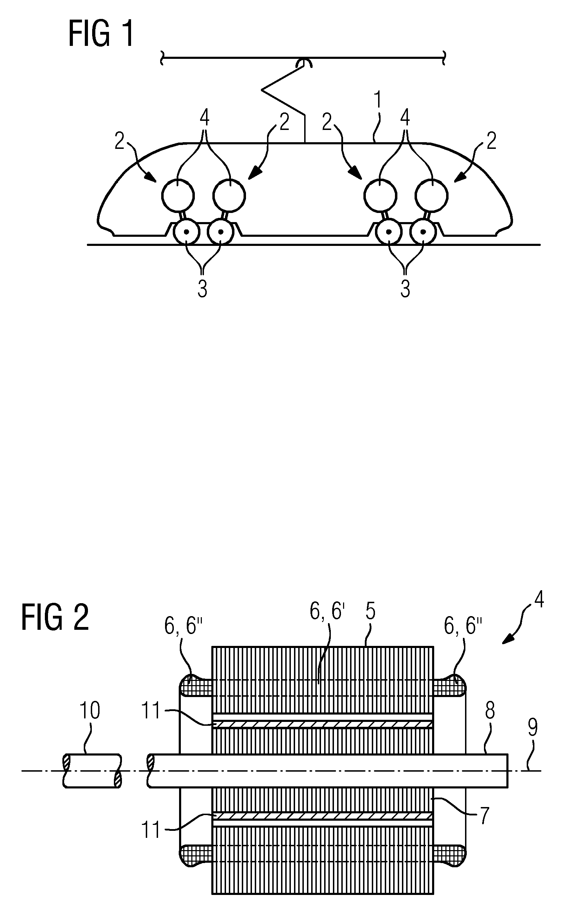

Gemäß FIG 1 weist ein Landfahrzeug 1 mehrere Fahrantriebe 2 auf. Die Fahrantriebe 2 treiben jeweils mindestens ein Rad 3 des Landfahrzeugs 1 an. Die Fahrantriebe 2 weisen zum Antreiben des jeweiligen Rades 3 jeweils eine Synchronmaschine 4 auf. Die jeweilige Synchronmaschine 4 ist in der Regel über einen jeweiligen Umrichter gespeist. Die Umrichter sind in den FIG nicht mit dargestellt.

Entsprechend der Darstellung in FIG 1 ist das Landfahrzeug 1 als Schienenfahrzeug ausgebildet. Diese Ausgestaltung stellt im Rahmen der Anwendung der vorliegenden Erfindung bei einem Landfahrzeug den Regelfall dar. Die vorliegende Erfindung ist ebenso jedoch auch dann anwendbar, wenn das Landfahrzeug 1 nicht schienengebunden ist, beispielsweise wenn das Landfahrzeug 1 als Elektroauto ausgebildet ist und jedes Rad des Elektroautos einen eigenen Antrieb aufweist.

Die Synchronmaschine 4 weist gemäß FIG 2 einen Stator 5 auf. In dem Stator 5 ist eine Statorwicklung 6 angeordnet. Die Statorwicklung 6 weist einen Mittelteil 6' sowie zwei Wicklungsköpfe 6" auf. Der Mittelteil 6' der Statorwicklung 6 ist derjenige Teil der Statorwicklung 6, der sich im Stator 5 selbst befindet. Die Wicklungsköpfe 6" sind diejenigen Teile der Statorwicklung 6, welche axial über den Stator 5 hinausragen.

Die Synchronmaschine 4 weist weiterhin einen Rotor 7 auf. Der Rotor 7 ist auf einer Welle 8 angeordnet. Die Welle 8 und mit ihr der Rotor 7 sind um eine Rotationsachse 9 rotierbar. In manchen Ausgestaltungen der vorliegenden Erfindung - dies wird in Verbindung mit den weiteren FIG erläutert werden - handelt es sich bei der Welle 8 um die Motorwelle 10 der Synchronmaschine 4. In anderen Ausgestaltungen handelt es sich um eine eigene, von der Motorwelle 10 verschiedene Welle. In diesem Fall fluchtet die Welle 8 mit der Motorwelle 10, das heißt die Rotationsachse 9 der Welle 8 ist mit der Rotationsachse der Motorwelle 10 identisch. Im Rotor 7 sind Permanentmagnete 11 angeordnet. Die Synchronmaschine 4 ist daher als permanenterregte Synchronmaschine ausgebildet. Die Permanentmagnete 11 bzw. deren Magnetfeld und ein durch Bestromen der Statorwicklung 6 generiertes magnetisches Drehfeld wirken im Betrieb der Synchronmaschine 4 zur Erzeugung eines Drehmoments zusammen.

Die Begriffe "axial", "radial" und "tangential" sind stets auf die Rotationsachse 9 bezogen. "Axial" ist eine Richtung parallel zur Rotationsachse 9. "Radial" ist eine Richtung orthogonal zur Rotationsachse 9 auf die Rotationsachse 9 zu bzw. von ihr weg. "Tangential" ist eine Richtung, die sowohl orthogonal zur Axialrichtung als auch orthogonal zur Radialrichtung verläuft. "Tangential" bedeutet also eine Richtung, die bei konstanter Axialposition und mit konstantem Radialabstand kreisförmig um die Rotationsachse 9 herum gerichtet ist.

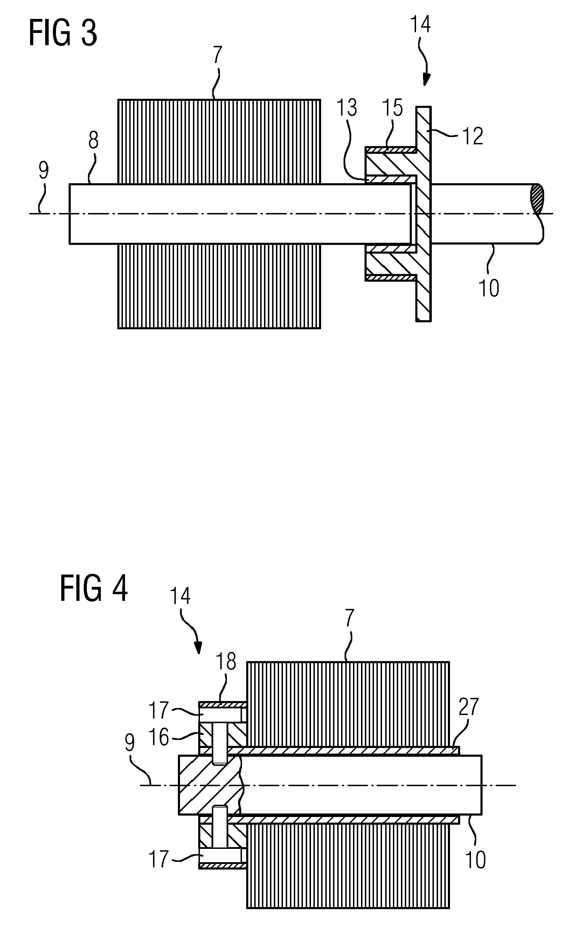

Im Rahmen der Ausgestaltung gemäß FIG 3 ist die Welle 8 eine eigenständige Welle, also eine von der Motorwelle 10 verschiedene Welle. Im Rahmen der Ausgestaltung gemäß FIG 3 wird die Welle 8 nachfolgend als Rotorwelle bezeichnet. Der Rotor 7 ist auf der Rotorwelle 8 drehfest angeordnet. Die Motorwelle 10 weist eine Nabe 12 auf. Die Nabe 12 übergreift die Rotorwelle 8. Zwischen der Rotorwelle 8 und der Nabe 12 ist eine Lagerung 13 angeordnet. Prinzipiell ist die Rotorwelle 8 relativ zur Nabe 12 daher rotierbar. Die Lagerung 13 kann insbesondere als Notlagerung ausgebildet sein.

Der Rotor 7 ist (indirekt über die Rotorwelle 8) mit der Motorwelle 10 über eine Verbindungseinrichtung 14 verbunden. Die Verbindungseinrichtung 14 umfasst im Rahmen der Ausgestaltung gemäß FIG 3 zunächst die Nabe 12. Weiterhin umfasst die Verbindungseinrichtung 14 ein Halteelement 15. Mittels des Halteelements 15 wird die Nabe 12 radial an die Rotorwelle 8 angepresst. Aufgrund der Pressung ist es möglich, das Drehmoment, das durch das Zusammenwirken von Statorwicklung 6 und Permanentmagneten 11 generiert wird, auf die Motorwelle 10 zu übertragen. Die Verbindungseinrichtung 14 ist somit derart ausgebildet ist, dass sie den Rotor 7 (zunächst) drehfest mit der Motorwelle 10 verbindet. Das Halteelement 15 bewirkt im Regelfall eine reibschlüssige, in manchen Fällen eine formschlüssige Verbindung der Rotorwelle 8 mit der Motorwelle 10.

Das Halteelement 15 besteht jedoch zumindest teilweise - vorzugsweise vollständig - aus einem Material, dessen Festigkeit und/oder Zusammenhalt im Falle eines Kurzschlusses der Statorwicklung 6 durch eine auftretende Überhitzung der Statorwicklung 6 und/oder auftretende Lichtbögen so weit reduziert wird, dass die Pressung der Nabe 12 an die Rotorwelle 8 aufgehoben wird. Beispielsweise kann das Halteelement 15 als Bandage aus einem derartigen Material ausgebildet sein, welche die Nabe 12 radial außen umgibt. Erhitzt sich die Bandage aufgrund eines Wicklungskurzschlusses und der dadurch auftretenden Fehlerströme, so verliert die Bandage ihre Festigkeit.

Die Pressung wird dadurch aufgehoben, so dass die Rotorwelle 8 über die Lagerung 13 relativ zur Motorwelle 10 drehbar ist. Bei einer späteren Abkühlung der Bandage erstarrt diese zwar wieder, die vorherige drehfeste Verbindung zwischen Motorwelle 10 und Rotorwelle 8 (und über die Rotorwelle 8 weiter zum Rotor 7) wird dadurch jedoch nicht wieder hergestellt. Sie bleibt vielmehr aufgehoben. Die Verbindungseinrichtung 14 ist somit derart ausgebildet ist, dass sie im Falle eines Kurzschlusses der Statorwicklung 6 automatisch die drehfeste Verbindung des Rotors 7 löst, so dass ein auf die Motorwelle 10 wirkendes Drehmoment nicht mehr auf den Rotor 7 übertragen wird.

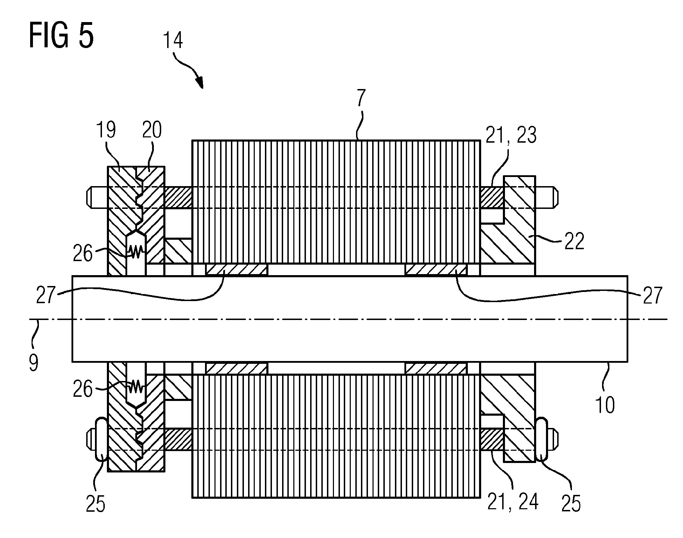

Nachfolgend werden in Verbindung mit den FIG 4 und 5 weitere mögliche Ausgestaltungen der Synchronmaschine 4 erläutert. Bei diesen Ausgestaltungen ist der Rotor 7 direkt auf der Motorwelle 10 drehbar gelagert. Auch bei diesen Ausgestaltungen ist jedoch der Rotor 7 mit der Motorwelle 10 über die Verbindungseinrichtung 14 verbunden. Die Verbindungseinrichtung 14 ist ebenso wie bei der Ausgestaltung gemäß FIG 3 derart ausgebildet, dass sie den Rotor 7 (zunächst) drehfest mit der Motorwelle 10 verbindet. In diesem Zustand ist es also möglich, dass ein Drehmoment, das durch das Zusammenwirken von Statorwicklung 6 und Permanentmagneten 11 generiert wird, auf die Motorwelle 10 übertragen wird. Die Verbindungseinrichtung 14 ist jedoch sowohl bei der Ausgestaltung gemäß FIG 4 als auch bei der Ausgestaltung gemäß FIG 5 derart ausgebildet, dass sie im Falle eines Kurzschlusses der Statorwicklung 6 automatisch die drehfeste Verbindung des Rotors 7 löst. Ein auf die Motorwelle 10 wirkendes Drehmoment wird dann nicht mehr auf den Rotor 7 übertragen. Auch bei diesen Ausgestaltungen bleibt nach einem Auflösen der drehfesten Verbindung diese auch aufgelöst.

Bei der Ausgestaltung gemäß FIG 4 umfasst die Verbindungseinrichtung 14 einen Ring 16, der an einem axialen Ende des Rotors 7 mit dem Rotor 7 drehfest verbunden ist. Der Ring 16 weist mindestens eine Ausnehmung auf. Dargestellt sind in FIG 4 zwei derartige Ausnehmungen. Meist sind drei oder vier Ausnehmungen vorhanden. Weiterhin weist die Motorwelle 10 für jede Ausnehmung des Rings 16 jeweils eine korrespondierende Ausnehmung auf.

Nachfolgend wird stets auf eine einzelne Ausnehmung des Rings 16 und die korrespondierende Ausnehmung der Motorwelle 10 Bezug genommen. Die entsprechenden Ausführungen gelten analog auch, wenn der Ring 16 und die Motorwelle 10 jeweils mehrere Ausnehmungen aufweisen.

Sowohl die Ausnehmung des Rings 16 als auch die Ausnehmung der Motorwelle 10 verlaufen radial. In die Ausnehmung des Rings 16 ist ein Bolzen 17 eingeführt. Der Bolzen 17 erstreckt sich durch die Ausnehmung des Rings 16 hindurch in die korrespondierende Ausnehmung der Motorwelle 10 hinein. Der Bolzen 17 ist somit teilweise in der Ausnehmung des Rings 16 und teilweise in der Ausnehmung der Motorwelle 10 angeordnet. Der Bolzen 17 bewirkt eine formschlüssige Verbindung des Rotors 7 mit der Motorwelle 10. Das durch das Zusammenwirken von Statorwicklung 6 und Permanentmagneten 11 generierte Drehmoment kann somit über den Bolzen 17 auf die Motorwelle 10 übertragen werden.

Die Übertragung des Drehmoments ist selbstverständlich nur so lange möglich, wie der Bolzen 17 in beiden Ausnehmungen (also sowohl der Ausnehmung des Rings 16 als auch der Ausnehmung der Motorwelle 10) angeordnet ist. Weiterhin wirken auf den Bolzen 17 während des Rotierens der Motorwelle 10 Fliehkräfte. Die Verbindungseinrichtung 14 umfasst daher ein Halteelement 18, mittels dessen eine radiale Verschiebung des Bolzens 17 aus der Ausnehmung der Motorwelle 10 (zunächst) verhindert wird. Das Halteelement 18 kann entsprechend der Darstellung in FIG 4 als Bandage ausgebildet sein, die den Ring 16 radial außen umgibt. Analog zu der Ausgestaltung gemäß FIG 3 besteht das Halteelement 18 zumindest teilweise - vorzugsweise sogar vollständig - aus einem Material, dessen Festigkeit und/oder Zusammenhalt im Falle eines Kurzschlusses der Statorwicklung 6 durch eine auftretende Überhitzung der Statorwicklung 6 und/oder auftretende Lichtbögen reduziert wird. Die obenstehenden Ausführungen zum Halteelement 15 der Ausgestaltung von FIG 3 sind analog anwendbar.

Im Falle eines Kurzschlusses der Statorwicklung 6 verliert das Halteelement 18 somit die Fähigkeit, den Bolzen 17 zurückzuhalten. Dadurch kann der Bolzen 17 sich aus der Ausnehmung der Motorwelle 10 heraus verschieben. Bei einer späteren Abkühlung der Bandage erstarrt diese zwar wieder. Der Bolzen 17 wird aber nicht wieder zurück in die Ausnehmung der Motorwelle 10 gedrückt. Er kann zwar unter Umständen durch die Schwerkraft dorthin zurückfallen. Spätestens bei einem erneuten Rotieren der Motorwelle 10 wird er durch die auftretenden Fliehkräfte jedoch wieder aus der Ausnehmung der Motorwelle 10 heraus bewegt. Gegebenenfalls kann - dies ist in FIG 4 nicht mit dargestellt - die Verbindungseinrichtung 14 weiterhin eine Druckfeder aufweisen, mittels derer auf den Bolzen 17 eine nach radial außen gerichtete Kraft ausgeübt wird. Die Druckfeder ist in diesem Fall innerhalb der Motorwelle 10 angeordnet.

FIG 5 zeigt eine weitere Ausgestaltung der Rotoranordnung der Synchronmaschine 4. Diese Ausgestaltung ist derzeit besonders bevorzugt. Bei der Ausgestaltung gemäß FIG 5 umfasst die Verbindungseinrichtung 14 ein erstes Kupplungsteil 19 und ein zweites Kupplungsteil 20. Das erste Kupplungsteil 19 ist drehfest auf der Motorwelle 10 angeordnet. Das zweite Kupplungsteil 20 ist drehfest mit dem Rotor 7 verbunden. Die Verbindungseinrichtung 14 umfasst weiterhin ein Halteelement 21. Das Halteelement 21 durchdringt sowohl den Rotor 7 als auch das erste Kupplungsteil 19 als auch das zweite Kupplungsteil 20 axial. Meist ist auf der von den Kupplungsteilen 19, 20 abgewandten anderen Seite des Rotors 7 zusätzlich ein Druckring 22 angeordnet, der ebenfalls von dem Halteelement 21 axial durchdrungen wird. Das Halteelement 21 steht unter Zugspannung. Mittels des Halteelements 21 wird daher (zunächst) das erste Kupplungsteil 19 axial an das zweite Kupplungsteil 20 angedrückt (verspannt). Dadurch, dass das Halteelement 21 die Kupplungsteil 19, 20 aneinander andrückt, ist es möglich, das durch das Zusammenwirken von Statorwicklung 6 und Permanentmagneten 11 generierte Drehmoment auf die Motorwelle 10 zu übertragen. Die Übertragung des Drehmoments erfolgt also durch das Zusammenwirken von erstem zweitem Kupplungsteil 19, 20. Über die Kupplungsteile 19, 20 besteht im Regelfall eine reibschlüssige, in manchen Fällen eine formschlüssige Verbindung des Rotors 7 mit der Motorwelle 10.

Ebenso wie bei den Ausgestaltungen der FIG 3 und 4 besteht auch bei der Ausgestaltung von FIG 5 das Halteelement 21 zumindest teilweise aus einem Material, dessen Festigkeit und/ oder Zusammenhalt im Falle eines Kurzschlusses der Statorwicklung 6 durch eine auftretende Überhitzung der Statorwicklung 6 und/oder auftretende Lichtbögen so weit reduziert wird, dass ein von dem Halteelement 21 auf das erste und das zweite Kupplungsteil 19, 20 ausgeübter Druck reduziert wird. Der Druck wird insbesondere so weit reduziert, dass das Halteelement 21 ein axiales Verschieben des ersten des zweiten Kupplungsteils 19, 20 voneinander weg ermöglicht. Dadurch sind die Kupplungsteile 19, 20 nicht mehr drehfest miteinander verbunden, so dass eine Drehung der Motorwelle 10 von einer Drehung des Rotors 7 entkoppelt wird. Das Halteelement 21 kann - je nach Ausgestaltung - beispielsweise sich aus den Kupplungsteilen 19, 20 herausbewegen, sich auflösen oder abscheren.

Bei der Ausgestaltung gemäß FIG 5 kann das Halteelement 21 als Anzahl von Bandagen 23 ausgebildet sein. Dies ist für eine einzelne Bandage 23 im oberen Teil von FIG 5 dargestellt. Für die Ausgestaltung der Bandagen 23 als solche gelten die obenstehend in Verbindung mit den FIG 3 und 4 getroffenen Ausführungen in analoger Weise.

Alternativ kann das Halteelement 21 als Anzahl von Bolzen 24 ausgebildet sein, die an beiden axialen Enden durch Fixierungselemente 25 gesichert sind. Dies ist im unteren Teil von FIG 5 dargestellt. Die Bolzen 24 bestehen aus Stahl oder einem anderen geeigneten Material. Die Festigkeit und der Zusammenhalt der Bolzen 24 bleiben auch im Falle eines Kurzschlusses der Statorwicklung 6 erhalten. Die Fixierungselemente 25 bestehen jedoch aus einem Material, dessen Festigkeit und/oder Zusammenhalt im Falle eines Kurzschlusses der Statorwicklung 6 durch auftretende Überhitzung der Statorwicklung 6 und/oder auftretende Lichtbögen reduziert wird. Insbesondere können die Fixierungselemente 25 als Schmelzsicherungen ausgebildet sein.

Vorzugsweise sind entsprechend der Darstellung in FIG 5 zwischen dem ersten und dem zweiten Kupplungsteil 19, 20 Druckfedern 26 angeordnet. Mittels der Druckfedern 26 kann auf das erste und das zweite Kupplungsteil 19, 20 eine das erste und das zweite Kupplungsteil 19, 20 voneinander weg treibende Kraft ausgeübt werden. Dadurch kann gewährleistet werden, dass die von den Kupplungsteilen 19, 20 gebildete Kopplung sofort öffnet, wenn die Fixierungselemente 25 auf der einen oder der anderen Seite des Rotors 7 ihre Festigkeit oder ihren Zusammenhalt verlieren.

Im Rahmen der Ausgestaltungen der FIG 4 und 5 ist der Rotor 7 auf der Motorwelle 10 mittels einer Lagerung 27 gelagert. Die Lagerung 27 ist vorzugsweise als Notlagerung ausgebildet.

Zusammengefasst betrifft die vorliegende Erfindung somit folgenden Sachverhalt:
Eine permanenterregte Synchronmaschine 4 weist einen Stator 5 auf, in dem eine Statorwicklung 6 angeordnet ist. Die Synchronmaschine 4 weist einen um eine Rotationsachse 9 rotierbaren Rotor 7 auf, in dem Permanentmagnete 11 angeordnet sind. Der Rotor 7 ist mit einer Motorwelle 10 über eine Verbindungseinrichtung 14 verbunden. Die Verbindungseinrichtung 14 ist derart ausgebildet, dass sie zunächst den Rotor 7 drehfest mit der Motorwelle 10 verbindet, so dass ein durch das Zusammenwirken von Statorwicklung 6 und Permanentmagneten 11 generiertes Drehmoment auf die Motorwelle 10 übertragen wird. Die Verbindungseinrichtung 14 ist weiterhin derart ausgebildet, dass sie im Falle eines Kurzschlusses der Statorwicklung 6 automatisch die drehfeste Verbindung des Rotors 7 löst, so dass ein auf die Motorwelle 10 wirkendes Drehmoment nicht mehr auf den Rotor 7 übertragen wird.

Die vorliegende Erfindung weist viele Vorteile auf. Insbesondere ist sie einfach implementierbar. Weiterhin kann auf einfache und zuverlässige Weise im Falle eines Wicklungskurzschlusses die drehfeste Verbindung des Rotors 7 mit der Motorwelle 10 aufgehoben werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Permanenterregte Synchronmaschine,
- wobei die Synchronmaschine einen Stator (5) aufweist, in dem eine Statorwicklung (6) angeordnet ist,
- wobei die Synchronmaschine einen um eine Rotationsachse (9) rotierbaren Rotor (7) aufweist, in dem Permanentmagnete (11) angeordnet sind,
- wobei der Rotor (7) mit einer Motorwelle (10) über eine Verbindungseinrichtung (14) verbunden ist,
- wobei die Verbindungseinrichtung (14) derart ausgebildet ist, dass sie zunächst den Rotor (7) drehfest mit der Motorwelle (10) verbindet, so dass ein durch das Zusammenwirken von Statorwicklung (6) und Permanentmagneten (11) generiertes Drehmoment auf die Motorwelle (10) übertragen wird,
- wobei die Verbindungseinrichtung (14) weiterhin derart ausgebildet ist, dass sie im Falle eines Kurzschlusses der Statorwicklung (6) automatisch die drehfeste Verbindung des Rotors (7) löst, so dass ein auf die Motorwelle (10) wirkendes Drehmoment nicht mehr auf den Rotor (7) übertragen wird.

2. Synchronmaschine nach Anspruch 1, **dadurch gekennzeichnet,**
- **dass** der Rotor (7) drehfest auf einer von der Motorwelle (10) verschiedenen Rotorwelle (8) angeordnet ist,
- **dass** die Motorwelle (10) eine die Rotorwelle (8) übergreifende Nabe (12) aufweist,
- **dass** zwischen der Rotorwelle (8) und der Nabe (12) eine Lagerung (13) angeordnet ist und
- **dass** die Verbindungseinrichtung (14) ein Halteelement (15) umfasst, mittels dessen die Nabe (13) zunächst radial an die Rotorwelle (8) angepresst wird, so dass aufgrund der Pressung das durch das Zusammenwirken von Statorwicklung (6) und Permanentmagneten (11) generierte Drehmoment auf die Motorwelle (10) übertragen wird, und
- **dass** das Halteelement (15) zumindest teilweise aus einem Material besteht, dessen Festigkeit und/oder Zusammenhalt im Falle eines Kurzschlusses der Statorwicklung (6) durch eine auftretende Überhitzung der Statorwicklung (6) und/ oder auftretende Lichtbögen so weit reduziert wird, dass die Pressung der Nabe (13) an die Rotorwelle (8) aufgehoben wird.

3. Synchronmaschine nach Anspruch 2, **dadurch gekennzeichnet, dass** das Halteelement (15) als die Nabe (13) radial außen umgebende Bandage ausgebildet ist.

4. Synchronmaschine nach Anspruch 2 oder 3, **dadurch gekennzeichnet, dass** die Lagerung (13) zwischen der Rotorwelle (8) und der Nabe (12) als Notlagerung ausgebildet ist.

5. Synchronmaschine nach Anspruch 1, **dadurch gekennzeichnet,**
- **dass** der Rotor (7) auf der Motorwelle (10) drehbar gelagert ist,
- **dass** die Verbindungseinrichtung (14) einen Ring (16) umfasst, der an einem axialen Ende des Rotors (7) mit dem Rotor (7) drehfest verbunden ist,
- **dass** die Verbindungseinrichtung (14) mindestens einen Bolzen (17) umfasst, der teilweise in einer Ausnehmung des Rings (16) und teilweise in einer Ausnehmung der Motorwelle (10) angeordnet ist, so dass das durch das Zusammenwirken von Statorwicklung (6) und Permanentmagneten (11) generierte Drehmoment über den Bolzen (17) auf die Motorwelle (10) übertragen wird,
- **dass** die Verbindungseinrichtung (14) ein Halteelement (18) umfasst, mittels dessen eine radiale Verschiebung des Bolzens (17) aus der Ausnehmung der Motorwelle (10) zunächst verhindert wird, und
- **dass** das Halteelement (18) zumindest teilweise aus einem Material besteht, dessen Festigkeit und/oder Zusammenhalt im Falle eines Kurzschlusses der Statorwicklung (6) durch eine auftretende Überhitzung der Statorwicklung (6) und/ oder auftretende Lichtbögen so weit reduziert wird, dass der Bolzen (17) sich aus der Ausnehmung der Motorwelle (10) heraus verschiebt.

6. Synchronmaschine nach Anspruch 5, **dadurch gekennzeichnet, dass** das Halteelement (18) als den Ring (16) radial außen umgebende Bandage ausgebildet ist.

7. Synchronmaschine nach Anspruch 5 oder 6, **dadurch gekennzeichnet, dass** die Verbindungseinrichtung (14) mindestens eine Druckfeder aufweist, mittels derer auf den Bolzen (17) eine nach radial außen gerichtete Kraft ausgeübt wird.

8. Synchronmaschine nach Anspruch 1, **dadurch gekennzeichnet,**
- **dass** der Rotor (7) auf der Motorwelle (10) drehbar gelagert ist,
- **dass** die Verbindungseinrichtung (14) ein erstes Kupplungsteil (19) umfasst, das drehfest auf der Motorwelle (10) angeordnet ist,
- **dass** die Verbindungseinrichtung (14) ein zweites Kupplungsteil (20) umfasst, das drehfest mit dem Rotor (7) verbunden ist,
- **dass** die Verbindungseinrichtung (14) ein den Rotor (7) und das erste und das zweite Kupplungsteil (19, 20) axial durchdringendes Halteelement (21) umfasst, mittels dessen zunächst das erste Kupplungsteil (19) axial an das zweite Kupplungsteil (20) angedrückt wird, so dass das durch das Zusammenwirken von Statorwicklung (6) und Permanentmagneten (11) generierte Drehmoment durch das Zusammenwirken von erstem und zweitem Kupplungsteil (19, 20) auf die Motorwelle (10) übertragen wird, und
- **dass** das Halteelement (21) zumindest teilweise aus einem Material besteht, dessen Festigkeit und/oder Zusammenhalt im Falle eines Kurzschlusses der Statorwicklung (6) durch eine auftretende Überhitzung der Statorwicklung (6) und/ oder auftretende Lichtbögen so weit reduziert wird, dass ein von dem Halteelement (21) auf das erste und das zweite Kupplungsteil (19, 20) ausgeübter Druck so weit reduziert wird, dass es ein Verschieben des ersten und des zweiten Kupplungsteils (19, 20) voneinander weg ermöglicht.

9. Synchronmaschine nach Anspruch 8, **dadurch gekennzeichnet, dass** das Halteelement (21) als Anzahl von Bandagen (23) ausgebildet ist.

10. Synchronmaschine nach Anspruch 8, **dadurch gekennzeichnet,**
- **dass** das Halteelement (21) als Anzahl von Bolzen (24) ausgebildet ist, die an beiden axialen Enden durch Fixierungselemente (25) gesichert sind, und
- **dass** die Fixierungselemente (25) aus einem Material bestehen, dessen Festigkeit und/oder Zusammenhalt im Falle eines Kurzschlusses der Statorwicklung (6) durch auftretende Überhitzung der Statorwicklung (6) und/oder auftretende Lichtbögen reduziert wird.

11. Synchronmaschine nach Anspruch 8, 9 oder 10, **dadurch gekennzeichnet, dass** zwischen dem ersten und dem zweiten Kupplungsteil (19, 20) mindestens eine Druckfeder (26) angeordnet ist, mittels derer auf das erste und das zweite Kupplungsteil (19, 20) eine das erste und das zweite Kupplungsteil (19, 20) voneinander weg treibende Kraft ausgeübt wird.

12. Synchronmaschine nach einem der Ansprüche 5 bis 11, **dadurch gekennzeichnet, dass** eine Lagerung (27), mittels derer der Rotor (7) auf der Motorwelle (10) gelagert ist, als Notlagerung ausgebildet ist.

13. Landfahrzeug, wobei das Landfahrzeug mehrere Fahrantriebe (2) aufweist, die jeweils eine Synchronmaschine (4) nach einem der obigen Ansprüche aufweisen und mittels der Synchronmaschine (4) jeweils mindestens ein Rad (3) des Landfahrzeugs antreiben.
